# EUROPÄISCHE PATENTSCHRIFT

(11) **EP 3 513 091 B1**
(45) Veröffentlichungstag und Bekanntmachung des Hinweises auf die Patenterteilung: **11.11.2020**
(21) Anmeldenummer: 17762048.1
(22) Anmeldetag: 07.09.2017
(51) Int. Cl.: F16D 66/02

(54) **VERSCHLEISSÜBERWACHUNGSVORRICHTUNG UND SCHEIBENBREMSE MIT EINER SOLCHEN VERSCHLEISSÜBERWACHUNGSVORRICHTUNG**
WEAR MONITORING DEVICE AND DISK BRAKE COMPRISING SAID TYPE OR WEAR MONITORING DEVICE
DISPOSITIF DE SURVEILLANCE DE L'ÉTAT D'USURE ET FREIN À DISQUE DOTÉ D'UN TEL DISPOSITIF DE SURVEILLANCE DE L'ÉTAT D'USURE

(30) Priorität: 15.09.2016 DE 102016011190
(43) Veröffentlichungstag der Anmeldung: 24.07.2019
(73) Patentinhaber: WABCO Europe BVBA, 1170 Bruxelles (BE)
(72) Erfinder: JUNGMANN, Hans-Christian, 69517 Gorxheimertal (DE)
(74) Vertreter: Copi, Joachim
(86) Internationale Anmeldenummer: PCT/EP2017/001059
(87) Internationale Veröffentlichungsnummer: WO 2018/050272

(56) Entgegenhaltungen:
- EP-A1- 2 687 746
- DE-A1- 2 450 761
- DE-A1- 4 312 377
- DE-A1- 10 132 968
- DE-A1-102014 105 561

## Beschreibung

Die Erfindung betrifft eine Verschleißüberwachungsvorrichtung einer Scheibenbremse, die eine Bremsscheibe, einen auf einer ersten Seite der Bremsscheibe liegenden ersten Bremsbelag und einen auf einer zweiten Seite der Bremsscheibe liegenden zweiten Bremsbelag aufweist, insbesondere für Nutzfahrzeuge, mit einer ersten Sensoreinrichtung, die den kumulierten Verschleiß des ersten und des zweiten Bremsbelags quantitativ erfasst und ein dem kumulierten Verschleiß zugeordnetes erstes elektrisches Ausgangssignal an ihrem Ausgangsanschluss abgibt, einer Auswerteinrichtung und einer einerseits an den Ausgangsanschluss der ersten Sensoreinrichtung und andererseits an die Auswerteinrichtung angeschlossenen Signalleitung.

Verschleißüberwachungsvorrichtungen der eingangs genannten Art sind bekannt, beispielsweise aus der DE 43 12 377 A1. Danach ist nicht nur die erste Sensoreinrichtung für den kumulierten Verschleiß des ersten und des zweiten Bremsbelags vorgesehen, sondern zusätzlich eine zweite Sensoreinrichtung, die den Verschleiß nur eines der beiden Bremsbeläge erfasst. Diese zusätzlich zu der Erfassung des kumulierten Verschleißes vorgesehene Verschleißerfassung ist insbesondere dann notwendig, wenn zu erwarten oder zumindest nicht auszuschließen ist, dass die beiden Bremsbeläge in unterschiedlichem Maße verschleißen. Dadurch kann demjenigen Falle vorgebeugt werden, dass die beiden Bremsbeläge zwar in Summe noch ausreichend Reibbelag aufweisen, dass aber der stärker verschlissene Bremsbelag unbemerkt die Grenze des zulässigen Verschleißes überschreitet.

Die erste Sensoreinrichtung erfasst den kumulierten Verschleiß in den meisten Fällen quantitativ, was bedeutet, dass sich das von ihr erzeugte erste elektrische Ausgangssignal kontinuierlich oder stufenweise mit dem Verschleiß ändert. Ansprechend auf dieses Ausgangssignal erzeugt die Auswerteinrichtung dann ein entsprechendes Signal, beispielsweise zur Ansteuerung eines den jeweiligen Verschleißzustand anzeigenden Zeigers zur Anzeige eines sich entsprechend dem Verschleiß verlängernden oder verkürzenden Balkens oder dergleichen.

Demgegenüber kann es sich bei der zweiten Sensoreinrichtung um eine Einrichtung vom Typ "Schwarz/Weiß" handeln. Es wird nämlich beispielsweise nur sensiert, ob eine vorgegebene Verschleißgrenze erreicht ist oder nicht.

Es ist aufwendig, neben der den kumulierten Verschleiß erfassenden ersten Sensoreinrichtung noch eine zweite Sensoreinrichtung vorzusehen.

Der Erfindung liegt daher die Aufgabe zugrunde, die Verschleißüberwachungsvorrichtung der eingangs genannten Art derart weiterzubilden, dass nicht nur der kumulierte Verschleiß erfasst wird, sondern auch zumindest einer der beiden Bremsbeläge auf Erreichen einer vorgegebenen Verschleißgrenze überwacht wird, wobei der dafür erforderliche Aufwand jedoch möglichst gering gehalten werden soll.

Erfindungsgemäß wird die gestellte Aufgabe dadurch gelöst, dass die Signalleitung, die einerseits an den Ausgangsanschluss der ersten Sensoreinrichtung und andererseits an die Auswerteinrichtung angeschlossen ist, derart angeordnet ist, dass sie bei Erreichen einer vorgegebenen ersten Verschleißgrenze des ersten oder des zweiten Bremsbelages an einem Anschlag anschlägt.

Das Anschlagen der Signalleitung an dem ersten Anschlag kann in einfacher Weise zum Sensieren des Erreichens der vorgegebenen ersten Verschleißgrenze verwendet werden. Da dazu die ohnehin vorgesehene Signalleitung verwendet wird, ist der Aufwand besonders gering.

Ob es sich bei der genannten vorgegebenen ersten Verschleißgrenze um diejenige des ersten oder des zweiten Bremsbelages handelt, hängt davon ab, welcher der beiden Bremsbeläge potentiell derjenige ist, der mehr Verschleiß unterliegt.

Die Signalleitung, die ohnehin zur Verbindung der ersten Sensoreinrichtung mit der Auswerteinrichtung vorgesehen ist, stellt erfindungsgemäß eine zweite Sensoreinrichtung dar.

Nach einer besonders bevorzugten Ausführungsform ist es erfindungsgemäß vorgesehen, dass die Auswerteinrichtung dazu ausgelegt ist, ansprechend auf das Anschlagen der Signalleitung an dem Anschlag ein der ersten Verschleißgrenze zugeordnetes erstes Warnsignal abzugeben.

Nach dieser Ausführungsform der Erfindung wird die Auswerteinrichtung nicht nur zur Weiterverarbeitung des von der ersten Sensoreinrichtung abgegebenen ersten elektrischen Ausgangssignals verwendet, sondern auch zur Auswertung der Tatsache, dass die Signalleitung an dem Anschlag anschlägt. Dies hält den Gesamtaufwand gering.

Erfindungsgemäß weiter bevorzugt ist vorgesehen, dass der Anschlag an einem Bauteil ausgebildet ist, das ein vorbestimmtes elektrisches Potential hat.

Schlägt die Signalleitung an diesem Bauteil an, so wird sie auf das elektrische Potential des den Anschlag aufweisenden Bauteils gezogen. Diese Potentialänderung kann von der Auswerteinrichtung erfasst und in dem Sinne ausgewertet werden, dass die genannte erste Verschleißgrenze erreicht ist.

Zumindest bei dieser Ausgestaltung bedeutet das Anschlagen der Signalleitung an dem den Anschlag aufweisenden Bauteil einen galvanischen elektrischen Kontakt, damit die Signalleitung das Potential des genannten Bauteils annehmen kann.

Die Signalleitung ist erfindungsgemäß weiter bevorzugt derart angeordnet, dass sie bei Erreichen einer vorgegebenen zweiten Verschleißgrenze des ersten oder des zweiten Bremsbelags durchtrennt wird.

Diese Durchtrennung führt dazu, dass die Auswerteinrichtung kein Signal mehr von der Signalleitung bekommt. Diese Tatsache kann von der Auswerteinrichtung derart weiterverarbeitet werden, dass sie ein zweites Warnsignal abgibt.

Beispielsweise kann die erste Verschleißgrenze derart vorgegeben sein, dass eine Weiterverwendung der Bremse zwar noch unbedenklich ist, der einschlägige Bremsbelag jedoch schon sehr weit verschlissen ist, so dass er bald ausgetauscht werden muss. Die zweite Verschleißgrenze kann demgegenüber demjenigen Verschleiß des einschlägigen Bremsbelags entsprechen, bei dem er nicht mehr unbedenklich weiterverwendet werden kann, sondern vielmehr umgehend ausgetauscht werden muss.

Daher ist nach einer weiter bevorzugten Ausführungsform der Erfindung vorgesehen, dass die Auswerteinrichtung dazu ausgelegt ist, ansprechend auf das Durchtrennen der Signalleitung ein zweites Warnsignal abzugeben.

Dieses Warnsignal weist den Nutzer der Bremse darauf hin, dass ein Weiterbetrieb der Bremse bedenklich ist und stattdessen der einschlägige Bremsbelag ausgetauscht werden muss.

Prinzipiell kann der Anschlag an jedem Bauteil der Bremse ausgebildet oder angebracht sein, dessen Abstand zur Signalleitung sich verschleißbedingt ändert, insbesondere verringert. Erfindungsgemäß bevorzugt ist das den Anschlag aufweisende Bauteil jedoch die Bremsscheibe.

Erfindungsgemäß weiter bevorzugt ist vorgesehen, dass die Signalieitüng zumindest abschnittweise innerhalb eines Reibbelages des ersten oder des zweiten Bremsbelages liegt.

Damit ist eine besonders einfache Möglichkeit gefunden, die Signalleitung einerseits entsprechend dem Belagverschleiß zu bewegen und andererseits vor Umwelteinflüssen zu schützen. Dazu kann die Signalleitung in den Reibbelag durch Eingießen oder dergleichen eingebettet sein. Sie kann aber erfindungsgemäß auch insofern innerhalb des Reibbelages liegen. als sie beispielsweise innerhalb einer Nut in dem Reibbelag angeordnet ist. Eine solche Nut bietet bereits einen sachgemäßen Schutz vor den genannten Umwelteinflüssen.

Weiter bevorzugt weist die erste Sensoreinrichtung ein Potentiometer oder einen Hall-Sensor auf. Mit diesen beiden Bauteilen sind ausreichend präzise Sensierungen des kumulierten Verschleißes möglich.

Die Auswerteinrichtung und die Sensoreinrichtung können getrennt voneinander ausgeführt sein. Nach einer weiter bevorzugten Ausführungsform der Erfindung ist jedoch ein Gehäuse vorgesehen, in dem die Auswerteinrichtung und zumindest ein Teil der Sensoreinrichtung untergebracht sind. Durch ein solches gemeinsames Gehäuse kann die erfindungsgemäße Verschleißüberwachungsvorrichtung besonders kompakt ausgeführt werden.

Bei der Signalleitung handelt es sich um ein Verschleißteil. Daher ist es erfindungsgemäß besonders bevorzugt vorgesehen, dass die Signalleitung als separates Bauteil austauschbar ist. Auf diese Weise ist der Aufwand bei der Wartung verringert, weil nur das Verschleißteil "Signalleitung" ausgetauscht werden muss, nicht aber andere (teure) Bauteile, wie etwa der erste Sensor.

Die Erfindung schafft auch eine Scheibenbremse mit einer wie oben beschrieben ausgestalteten Verschleißüberwachungsvorrichtung.

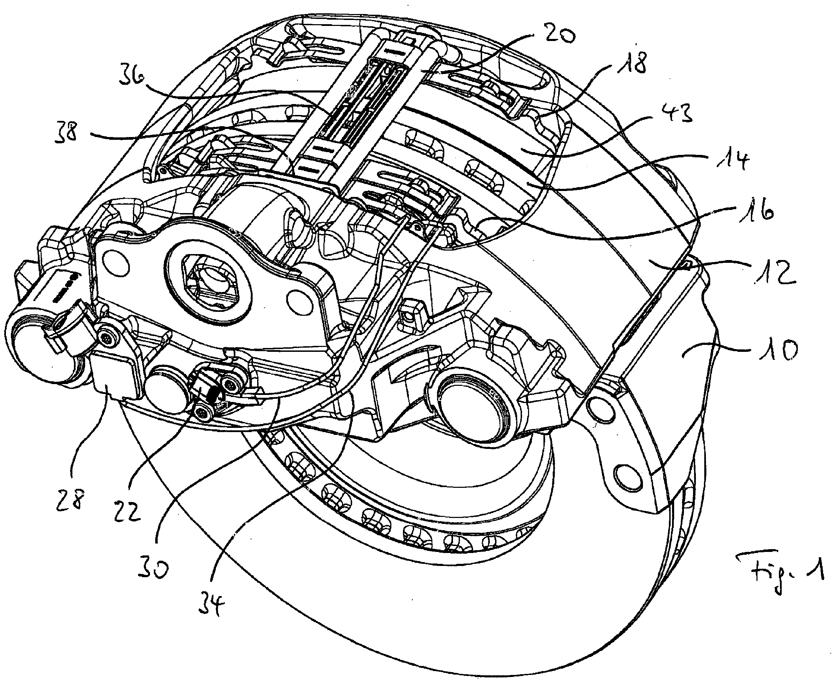

Im Folgenden ist die Erfindung anhand eines bevorzugten Ausführungsbeispiels unter Bezugnahme auf die beiliegende Zeichnung mit weiteren Einzelheiten näher erläutert. Dabei zeigen
- Figur 1: eine schematische perspektivische Ansicht einer Scheibenbremse mit einem bevorzugten Ausführungsbeispiel der erfindungsgemäßen Verschleißüberwachungsvorrichtung,

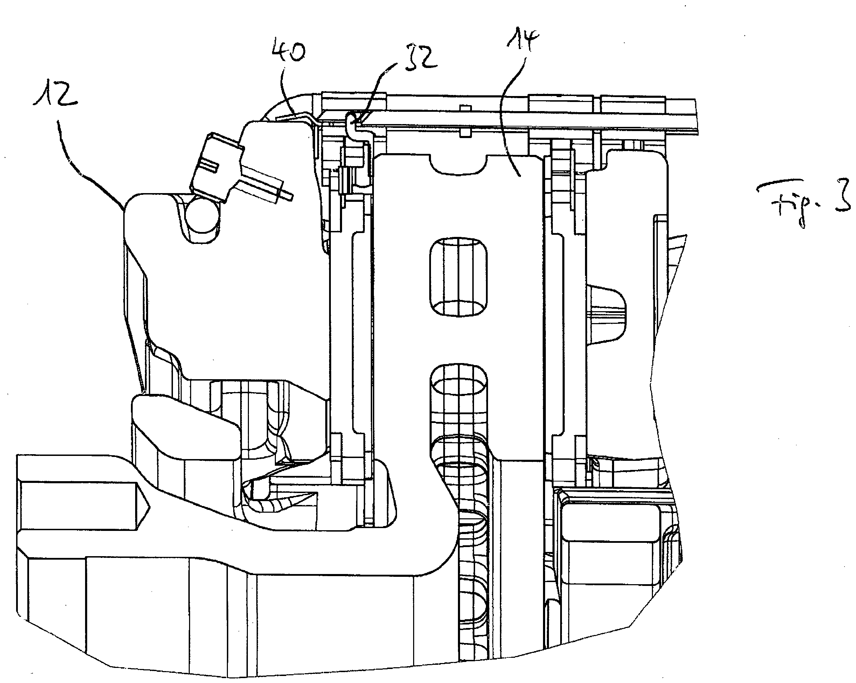

- die Figuren 2 und 3: jeweils schematische Teilansichten der Scheibenbremse nach Figur 1,
- Figur 4: ein Ausführungsbeispiel der erfindungsgemäßen Verschleißüberwachungsvorrichtung und
- Figur 5: ein Blockschaltbild der Verschleißüberwachungsvorrichtung.

Zu der in der Zeichnung dargestellten Scheibenbremse gehören ein Bremsenträger 10, ein Bremssattel 12, der gleitend gelagert ist, eine Bremsscheibe 14, ein erster Bremsbelag 16 und ein zweiter Bremsbelag 18. Der erste und der zweite Bremsbelag 16, 18 werden mittels eines Niederhaltebügels 20 niedergehalten.

Die Scheibenbremse ist mit einer Verschleißüberwachungsvorrichtung versehen, zu der ein erster Sensor 22 gehört. Bei dem ersten Sensor 22 handelt es sich um ein Potentiometer, das sich einerseits an dem Bremssattel 12 und andererseits an dem zuspannseitig angeordneten ersten Bremsbelag 16 abstützt. Das von dem ersten Sensor 22 an seinem Ausgangsanschluß 24 abgegebene Ausgangssignal U₃₀ entspricht damit dem kumulierten Verschleiß des ersten und des zweiten Bremsbelages 16, 18. Der Ausgangsanschluß 24 ist über eine Signalleitung 26 mit einer Auswerteinrichtung 28 verbunden. Zu der Signalleitung 26 gehören ein erster Leitungsabschnitt 30 und ein zweiter Leitungsabschnitt 34. Es ist ein Sensorstein 32 vorgesehen, in den die Signalleitung 26 eingebettet ist. Der Sensorstein 32 ist in dem in der Zeichnung dargestellten Ausführungsbeispiel ein Kunststoff-Bauelement. Er ist derart angeordnet, dass der erste Leitungsabschnitt 30 von dem ersten Sensor 22 zu ihm hin führt und der zweite Leitungsabschnitt 34 von ihm weg zu der Auswerteinrichtung 28 führt. Der Sensorstein 32 dient dazu, die Signalleitung 26 in vorgegebener Position zu halten. Wegen der oben beschriebenen Anordnung gelangt das von dem Ausgangsanschluß 24 des ersten Sensors 22 abgegebene Ausgangssignal U₃₀ über den ersten Leitungsabschnitt 30 und den zweiten Leitungsabschnitt 34 zu der Auswerteinrichtung 28. Zur Positionierung und Halterung des Sensorsteins 32 dienen ein pauschal mit der Bezugszahl 36 bezeichneter Rahmen, eine Lochplatte 38 und ein in montiertem Zustand auf dem Bremssattel 12 aufliegender Finger 40.

Der Sensorstein 32 ist derart angeordnet, dass er mit zunehmendem Verschleiß des Bremsbelags 18 beim Bremsen an der Bremsscheibe 14 anschlägt. Dadurch wird er allmählich abgeschliffen. Er ist derart angeordnet, dass bei Erreichen einer ersten Verschleißgrenze des zweiten Bremsbelags 18 die Signalleitung 26 beim Bremsen an der Bremsscheibe 14 anschlägt. Sie ist nämlich dann infolge allmählichen Abschleifens des Sensorsteins 32 auf der der Bremsscheibe 14 zugewandten Seite freigelegt. Dieses Anschlagen der Signalleitung 26 an der Bremsscheibe 14 bewirkt, dass die Signalleitung 26 auf das elektrische Potential der Bremsscheibe 14 gezogen wird (in der Regel auf Masse). Bei Erreichen einer zweiten Verschleißgrenze des zweiten Bremsbelags 18 wird die Signalleitung 26 von der Bremsscheibe 14 zerstört und dadurch durchtrennt.

Die geometrischen Verhältnisse sind bei dem in der Zeichnung dargestellten Ausführungsbeispiel der Erfindung derart gewählt, dass eine Weiterverwendung der Bremse bei Erreichen der ersten Verschleißgrenze zwar noch unbedenklich ist, der zweite Bremsbelag 18 jedoch schon sehr weit verschlissen ist, so dass er bald ausgetauscht werden muss. Bei Erreichen der zweiten Verschleißgrenze kann der zweite Bremsbelag 18 nicht mehr unbedenklich weiter verwendet werden, sondern muss vielmehr umgehend ausgetauscht werden.

Die oben beschriebene Ausgestaltung entspricht der Erwartung, dass der zweite Bremsbelag 18 stärker verschleißt als der erste Bremsbelag 16, weshalb der zweite Bremsbelag 18 gesondert überwacht wird. Sollte zu erwarten sein, dass der erste Bremsbelag 16 stärker verschleißt als der zweite Bremsbelag 18, kann im Rahmen der Erfindung auch der erste Bremsbelag 16 gesondert überwacht werden.

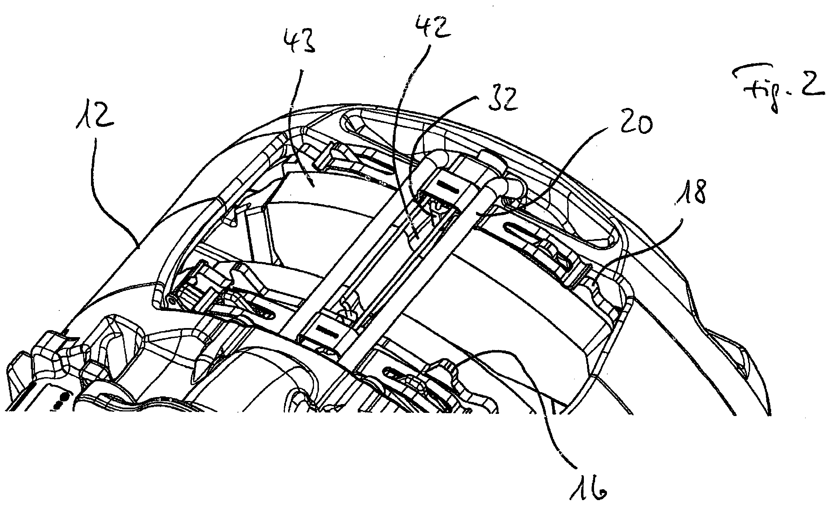

Wie insbesondere Figur 2 zu entnehmen ist, ist der Sensorstein 32 bei dem in der Zeichnung dargestellten Ausführungsbeispiel in einer sich in Axialrichtung der Bremse erstreckenden Nut 42 in dem Reibbelag 43 des zweiten Bremsbelags 18 angeordnet und damit innerhalb des Reibbeiags 43. Er liegt innerhalb des Radius der Bremsscheibe 14 und kann daher an ihr anschlagen, weshalb auch die in den Sensorstein 32 eingebettete Signalleitung 26 bei Erreichen der ersten Verschleißgrenze an der Bremsscheibe 14 anschlägt. Alternativ kann der Sensorstein 32 aber auch in den Reibbelag 43 eingegossen sein. Er kann auch gänzlich entfallen, wenn die Signalleitung 26 in anderer Weise in geeigneter Position gehalten wird, beispielsweise indem die Signalleitung 26 unmittelbar in den Reibbelag 43 eingegossen ist.

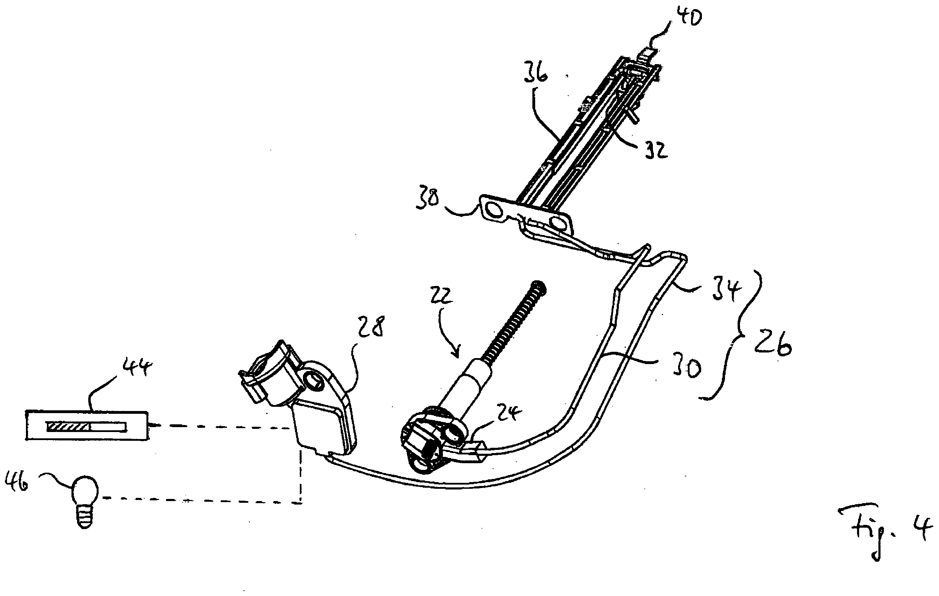

Wie der schematischen Darstellung in Figur 4 zu entnehmen ist, gehören zu der Auswerteinrichtung 28 eine Anzeigeeinrichtung 44, die dazu dient, den kumulierten Verschleiß des ersten und des zweiten Bremsbelages 16, 18 quantitativ in Form eines fortschreitenden Balkens anzuzeigen, sowie eine Warneinrichtung 46 in Form einer Lampe, die bei Erreichen der ersten Verschleißgrenze blinkt und bei Erreichen der zweiten Verschleißgrenze dauerhaft aufleuchtet.

Bei dem in der Zeichnung dargestellten Ausführungsbeispiel gibt die Auswerteinrichtung 28 je nach Betriebszustand ein Ausgangssignal U_{A} aus, bei dem es sich um ein einfaches Spannungssignal handelt. Die Umsetzung in geeignete Signale zur Steuerung der Anzeigeeinrichtung 44 und der Warneinrichtung 46 erfolgt dann in den jeweiligen Baueinheiten 44 bzw. 46. Alternativ kann aber vorgesehen sein, dass die Umsetzung in die geeigneten Signale in der Auswerteinrichtung 28 selbst oder in einer zwischen der Auswerteinrichtung 28 einerseits und der Anzeigeeinrichtung 44 bzw. der Warneinrichtung 46 andererseits angeordneten elektronischen Schaltung erfolgt.

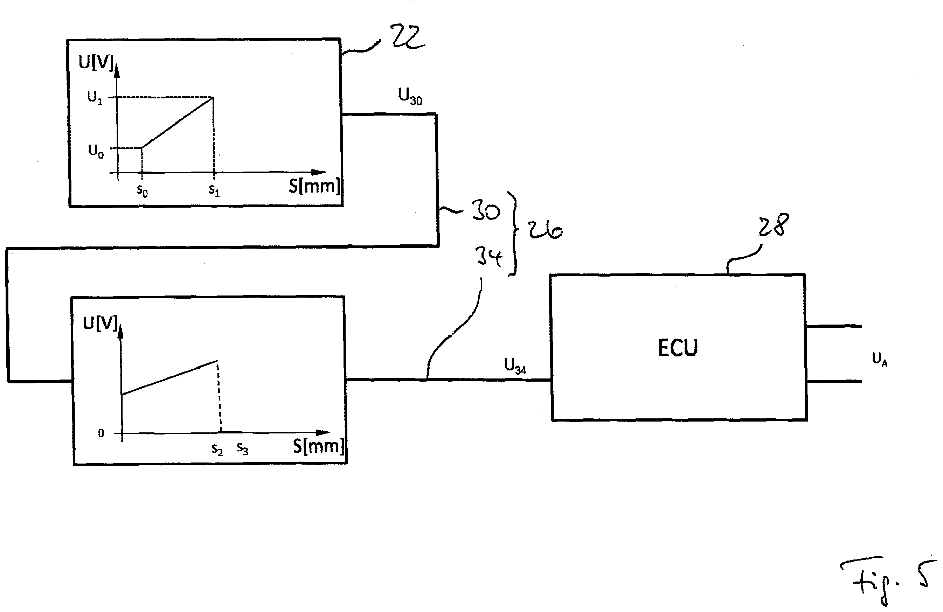

Die Funktion des oben dargestellten Ausführungsbeispiels der erfindungsgemäßen Verschleißüberwachungsvorrichtung ist im Folgenden insbesondere unter Bezugnahme auf Figur 5 erläutert:
Der erste Sensor 22 gibt an seinem Ausgangsanschluß 24 das Ausgangssignal U₃₀ aus. Bei neuen Bremsbelägen entspricht das Ausgangssignal U₃₀ der Spannung U₀. Mit zunehmendem kumuliertem Verschleiß steigt das Ausgangssignal U₃₀ an, bis es den Wert U₁ annimmt. Der Verschleiß ist in Figur 5 mit dem Symbol Sₙ(n=0,1,2,3) bezeichnet, wobei S₀ dem (nicht vorhandenen) Verschleiß bei neuen Bremsbelägen entspricht.

Das Ausgangssignal U₃₀ wird über die Signalleitung 26 an die Auswerteinrichtung 28 gegeben. Bei der Auswerteinrichtung 28 handelt es sich um eine ECU.

Derjenige Verschleiß, der der ersten Verschleißgrenze entspricht, bei dem also der Sensorstein 32 so weit abgeschliffen ist, dass die Signalleitung 26 in Kontakt mit der Bremsscheibe 14 kommt, ist mit S₂ bezeichnet.

Wie bereits oben erläutert, stellt dadurch erfindungsgemäß die Signalleitung 26 einen zweiten Sensor dar. Dabei handelt es sich um einen sogenannten Schwarz-Weiß-Sensor, weil er im Gegensatz zu dem ersten Sensor 22 nicht etwa dazu dient, Einzelwerte quantitativ auszugeben, sondern nur Auskunft darüber gibt, ob ein Grenzwert erreicht ist, beispielsweise die erste Verschleißgrenze.

Die Auswerteinrichtung 28 arbeitet entsprechend der folgenden Wahrheitstabelle:

### Wahrheitstabelle

| **U₃₀** | **U₃₄** | **U_{A}** |
|---|---|---|
| U₀ ≤ U₃₀ ≤ U₁ | U₃₀ | U_{A0} ⁺kU₃₄ |
| U₃₀ > U₁ | U₃₀ | U_{A1} |
| U₀ ≤ U₃₀ ≤ U₁ | 0 | U_{A2} |
| U₃₀ > U₁ | 0 | U_{A2} |
| U₀ ≤ U₃₀ ≤ U₁ | kein Signal | U_{A3} |
| U_{S1} > U₁ | kein Signal | U_{A3} |

Sind der erste und der zweite Bremsbelag 16, 18 noch nicht verschlissen, wird das Ausgangssignal U₃₀ des ersten Sensors 22 über die als zweiter Sensor dienende Signalleitung 26 (unverändert) als Spannung U₃₄ an die Auswerteinrichtung 28 gegeben. Die Auswerteinrichtung 28 erzeugt daraufhin ein Ausgangssignal U_{A}, das proportional zu der Spannung U₃₄ und damit proportional zum kumulierten Verschleiß ist. Dieses Ausgangssignal U_{A} wird von der Anzeigeeinrichtung 44 angezeigt, umgesetzt in die Form eines Fortschrittsbalkens. Der in Figur 4 dargestellte Fortschrittsbalken entspricht etwa der Hälfte des zulässigen kumulierten Verschleißes des ersten und des zweiten Bremsbelages 16, 18.

Ist der Wert S₁ des kumulierten Verschleißes erreicht, wird ein Warnsignal U_{A1} ausgegeben. Dieses Warnsignal U_{A1} kann im Fahrzeug auf beliebige Weise umgesetzt werden, beispielsweise durch Blinken des Fortschrittsbaikens der Anzeigeeinrichtung 44.

Ist mit dem Verschleiß S₂ die erste Verschleißgrenze des zweiten Bremsbelags 18 erreicht, d.h. schlägt die in den Sensorstein 32 eingebettete Signalleitung 26 an die Bremsscheibe 14 an, fällt die Spannung U₃₄ auf Null Volt, weil sie der Potentialdifferenz zu Masse entspricht. In diesem Falle gibt die Auswerteinrichtung 28 das Warnsignal U_{A2} aus, das bewirkt, dass die Warneinrichtung 46 blinkt. Der Benutzer wird dadurch darauf hingewiesen, dass der zweite Bremsbelag 18 kurz vor seiner zulässigen Verschleißgrenze liegt, weshalb ein baldiger Belagwechsel ansteht.

Wie der Wahrheitstabelle entnommen werden kann, wird das Warnsignal U_{A2} unabhängig davon ausgegeben, ob der kumulierte Verschleiß noch im tolerablen Bereich liegt oder ob er bereits den Wert S₁ erreicht hat.

Kommt wie oben beschrieben die Signalleitung 26 beim Bremsen in Kontakt mit der Bremsscheibe 14, so dass ihr Potential auf Masse gezogen wird, so ist dies zunächst eine vorübergehende Erscheinung, weil der Kontakt zwischen der Signalleitung 26 und der Bremsscheibe 14 beim Lösen der Bremse wieder verlorengeht. Die Auswerteinrichtung 28 ist aber derart konzipiert, dass das Warnsignal U_{A2} dennoch weiter ausgegeben wird.

Wird das Fahrzeug trotz des Warnsignals U_{A2} weiter benutzt, so wird der zweite Bremsbelag 18 irgendwann so weit verschlissen sein, dass die Signalleitung 26 durch Kontakt mit der Bremsscheibe 14 durchtrennt wird. Dies entspricht dem Verschleiß S₃ in Figur 5. In diesem Falle bekommt die Auswerteinrichtung 28 kein Eingangssignal mehr. Sie gibt daraufhin das Warnsignal U_{A3} aus. Ansprechend auf dieses Warnsignal leuchtet die Warneinrichtung 46 nicht mehr blinkend, sondern dauerhaft, was dem Benutzer anzeigt, dass die zweite Verschleißgrenze des zweiten Bremsbelags 18 erreicht ist und daher dringend ein Belagwechsel durchzuführen ist.

Wiederum gilt, dass das dritte Warnsignal U_{A3} unabhängig davon ausgegeben wird, was der erste Sensor 22 meldet.

In dem obigen Ausführungsbeispiel wird der zweite Bremsbelag 18 gesondert auf Verschleiß überwacht. Wie bereits oben ausgeführt, kann alternativ auch der erste Bremsbelag 16 gesondert überwacht werden. Im Rahmen der Erfindung können auch beide Bremsbeläge 16, 18 gesondert überwacht werden.

Die in der obigen Beschreibung, den Ansprüchen sowie der Zeichnung offenbarten Merkmale der Erfindung können sowohl einzeln als auch in beliebiger Kombination für die Verwirklichung der Erfindung in ihren verschiedenen Ausführungsformen wesentlich sein.

### BEZUGSZEICHENLISTE

10 Bremsenträger
12 Bremssattel
14 Bremsscheibe
16 erster Bremsbelag
18 zweiter Bremsbelag
20 Niederhaltebügel
22 erster Sensor
24 Ausgangsanschluss (des ersten Sensors 22)
26 Signalleitung
28 Auswerteinrichtung
30 erster Leitungsabschnitt (der Signalleitung 26)
32 Sensorstein
34 zweiter Leitungsabschnitt (der Signalleitung 26)
36 Rahmen
38 Lochplatte
40 Finger
42 Nut
43 Reibbelag (des zweiten Bremsbelags 18)
44 Anzeigeeinrichtung
46 Warneinrichtung
Sₙ(n=0,1,2,3) Verschleiß
U₃₀ Ausgangssignal des ersten Sensors 22 (Spannung auf dem ersten Leitungsabschnitt 30)
U₃₄ Spannung auf dem zweiten Leitungsabschnitt 34
U_{A} Ausgangssignal (Ausgangsspannung) der Auswerteinrichtung 28
U_{An}(n=1,2,3) Warnsignal

## Patentansprüche

1. Verschieißüberwachungsvorrichtung einer Scheibenbremse, die eine Bremsscheibe (14), einen auf einer ersten Seite der Bremsscheibe liegenden ersten Bremsbelag (16) und einen auf einer zweiten Seite der Bremsscheibe liegenden zweiten Bremsbelag (18) aufweist, insbesondere für Nutzfahrzeuge, mit
einer ersten Sensoreinrichtung (22), die den kumulierten Verschleiß des ersten und des zweiten Bremsbelags quantitativ erfasst und ein dem kumulierten Verschleiß zugeordnetes erstes elektrisches Ausgangssignal an ihrem Ausgangsanschluss (24) abgibt,
einer Auswerteinrichtung (28) und
einer einerseits an den Ausgangsanschluss der ersten Sensoreinrichtung und andererseits an die Auswerteinrichtung angeschlossenen Signalleitung (26),
**dadurch gekennzeichnet, dass**
die Signalleitung (26) derart angeordnet ist, dass sie bei Erreichen einer vorgegebenen ersten Verschleißgrenze des ersten oder des zweiten Bremsbelages (16, 18) an einem Anschlag anschlägt.

2. Verschleißüberwachungsvorrichtung nach Anspruch 1, **dadurch gekennzeichnet, dass** die Auswerteinrichtung (28) dazu ausgelegt ist, ansprechend auf das Anschlagen der Signalleitung (26) an dem Anschlag ein der ersten Verschleißgrenze zugeordnetes erstes Warnsignal abzugeben.

3. Verschleißüberwachungsvorrichtung nach Anspruch 1 oder 2, **dadurch gekennzeichnet, dass** der Anschlag an einem Bauteil ausgebildet ist, das ein vorbestimmtes elektrisches Potential hat.

4. Verschleißüberwachungsvorrichtung nach einem der vorangehenden Ansprüche, **dadurch gekennzeichnet, dass** die Signalleitung (26) derart angeordnet ist, dass sie bei Erreichen einer vorgegebenen zweiten Verschleißgrenze des ersten oder des zweiten Bremsbelags (16, 18) durchtrennt wird.

5. Verschleißüberwachungsvorrichtung nach Anspruch 4, **dadurch gekennzeichnet, dass** die Auswerteinrichtung (28) dazu ausgelegt ist, ansprechend auf das Durchtrennen der Signalleitung (26) ein zweites Warnsignal abzugeben.

6. Verschleißüberwachungsvorrichtung nach einem der vorangehenden Ansprüche, **dadurch gekennzeichnet, dass** das den Anschlag aufweisende Bauteil die Bremsscheibe (14) ist.

7. Verschleißüberwachungsvorrichtung nach einem der vorangehenden Ansprüche, **dadurch gekennzeichnet, dass** die Signalleitung (26) zumindest abschnittweise innerhalb eines Reibbelages (43) des ersten oder des zweiten Bremsbelages (16, 18) liegt.

8. Verschleißüberwachungsvorrichtung nach einem der vorangehenden Ansprüche, **dadurch gekennzeichnet, dass** die erste Sensoreinrichtung (22) ein Potentiometer oder einen Hall-Sensor aufweist.

9. Verschleißüberwachungsvorrichtung nach einem der vorangehenden Ansprüche, **gekennzeichnet durch** ein Gehäuse, in dem die Auswerteinrichtung (28) und zumindest ein Teil der Sensoreinrichtung (22) untergebracht sind.

10. Verschleißüberwachungsvorrichtung nach einem der vorangehenden Ansprüche. **dadurch gekennzeichnet, dass** die Signalleitung (26) als separates Bauteil austauschbar ist.

11. Scheibenbremse mit einer Verschleißüberwachungsvorrichtung nach einem der vorangehenden Ansprüche.

## Claims

1. Wear-monitoring device of a disc brake which comprises a brake disc (14), a first brake lining (16) which lies on a first face of the brake disc, and a second brake lining (18) which lies on a second face of the brake disc, in particular for utility vehicles, having
a first sensor device (22) which quantitively ascertains the cumulative wear of the first brake lining and of the second brake lining and outputs at its output connection (24) a first electrical output signal which is associated with the cumulative wear,
an evaluation device (28) and
a signal line (26) which is connected on the one hand to the output connection of the first sensor device and on the other hand to the evaluation device,
**characterized in that**
the signal line (26) is arranged in such a way that when a predefined first wear limit of the first brake lining (16) or of the second brake lining (18) is reached, said signal line (26) comes into contact with a stop.

2. Wear-monitoring device according to Claim 1, **characterized in that** the evaluation device (28) is configured to output a first warning signal assigned to the first wear limit, in response to the signal line (26) coming into contact with the stop.

3. Wear-monitoring device according to Claim 1 or 2, **characterized in that** the stop is formed on a component which has a predefined electrical potential.

4. Wear-monitoring device according to one of the preceding claims, **characterized in that** the signal line (26) is arranged in such a way that when a predefined second wear limit of the first brake lining (16) or of the second brake lining (18) is reached, said signal line (26) is severed.

5. Wear-monitoring device according to Claim 4, **characterized in that** the evaluation device (28) is configured to output a second warning signal in response to the severing of the signal line (26).

6. Wear-monitoring device according to one of the preceding claims, **characterized in that** the component which has the stop is the brake disc (14).

7. Wear-monitoring device according to one of the preceding claims, **characterized in that** the signal line (26) bears at least in certain sections within a friction lining (43) of the first brake lining (16) and of the second brake lining (18).

8. Wear-monitoring device according to one of the preceding claims, **characterized in that** the first sensor device (22) has a potentiometer or a Hall sensor.

9. Wear-monitoring device according to one of the preceding claims, **characterized by** a housing in which the evaluation device (28) and at least part of the sensor device (22) are accommodated.

10. Wear-monitoring device according to one of the preceding claims, **characterized in that** the signal line (26) can be replaced as a separate component.

11. Disc brake having a wear-monitoring device according to one of the preceding claims.

## Revendications

1. Dispositif de surveillance de l'état d'usure d'un frein à disque qui présente un disque de frein (14), une première garniture de frein (16) située sur un premier côté du disque de frein et une deuxième garniture de frein (18) située sur un deuxième côté du disque de frein, destiné notamment à des véhicules utilitaires, comprenant un premier dispositif de détection (22) qui détecte de manière quantitative l'usure cumulée des première et deuxième garnitures de frein et émet au niveau de sa borne de sortie (24) un premier signal électrique de sortie associé à l'usure cumulée,
un dispositif d'évaluation (28) et
une ligne de signal (26) connectée d'une part à la borne de sortie du premier dispositif de détection et d'autre part au dispositif d'évaluation,
**caractérisé en ce que**
la ligne de signal (26) est disposée de telle sorte qu'elle heurte une butée lorsqu'une première limite d'usure prédéfinie de la première ou de la deuxième garniture de frein (16, 18) est atteinte.

2. Dispositif de surveillance de l'état d'usure selon la revendication 1, **caractérisé en ce que** le dispositif d'évaluation (28) est conçu pour émettre un premier signal d'avertissement associé à la première limite d'usure en réponse au fait que la ligne de signal (26) heurte la butée.

3. Dispositif de surveillance de l'état d'usure selon la revendication 1 ou 2, **caractérisé en ce que** la butée est réalisée sur un composant qui présente un potentiel électrique prédéterminé.

4. Dispositif de surveillance de l'état d'usure selon l'une des revendications précédentes, **caractérisé en ce que** la ligne de signal (26) est disposée de telle manière qu'elle soit coupée lorsqu'une deuxième limite d'usure prédéterminée de la première ou de la deuxième garniture de frein (16, 18) est atteinte.

5. Dispositif de surveillance de l'état d'usure selon la revendication 4, **caractérisé en ce que** le dispositif d'évaluation (28) est conçu pour émettre un deuxième signal d'avertissement en réponse à la coupure de la ligne de signal (26).

6. Dispositif de surveillance de l'état d'usure selon l'une des revendications précédentes, **caractérisé en ce que** le composant comportant la butée est le disque de frein (14).

7. Dispositif de surveillance de l'état d'usure selon l'une des revendications précédentes, **caractérisé en ce que** la ligne de signal (26) se trouve au moins par sections à l'intérieur d'une garniture à frottement (43) de la première ou de la deuxième garniture de frein (16, 18) .

8. Dispositif de surveillance de l'état d'usure selon l'une des revendications précédentes, **caractérisé en ce que** le premier dispositif de détection (22) comprend un potentiomètre ou un capteur à effet Hall.

9. Dispositif de surveillance de l'état d'usure selon l'une des revendications précédentes, **caractérisé par** un boîtier dans lequel sont logés le dispositif d'évaluation (28) et au moins une partie du dispositif de détection (22) .

10. Dispositif de surveillance de l'état d'usure selon l'une des revendications précédentes, **caractérisé en ce que** la ligne de signal (26) est interchangeable sous forme de composant séparé.

11. Frein à disque comportant un dispositif de surveillance de l'état d'usure selon l'une des revendications précédentes.
